# EUROPEAN PATENT APPLICATION

(11) **EP 4 678 405 A1**
(43) Date of publication of application: **14.01.2026**
(21) Application number: 24188372.7
(22) Date of filing: 12.07.2024
(51) Int. Cl.: B60B 7/00, B60B 19/10

(54) **A WHEEL CAP ARRANGEMENT**

(71) Applicant: VOLVO TRUCK CORPORATION, 405 08 Göteborg (SE)
(72) Inventor: MANDAL, Goutam, 732121 Malda (IN); BHAT, Sindhoor, 581355 Siddapur (IN); ARUCHAMY, Santhakumar, 641654 Tiruppur (IN)
(74) Representative: Kransell & Wennborg KB

(57) **Abstract**

A wheel cap arrangement (101) for a vehicle wheel (14) having a wheel hub (15) and a wheel brake (16) arranged at the wheel hub (15), the wheel cap arrangement (101) comprising: an outer cap (103) configured to be attached to the wheel hub (15), the outer cap (103) comprising a plurality of centrally arranged through-holes (105) and a plurality of peripherally arranged through-holes (107); an impeller (120) detachably attached to the outer cap (103), the impeller (120) comprising a centrally arranged impeller eye (122) and a plurality of directionally shaped vanes (124) arranged around the periphery of the impeller eye (122); wherein the impeller (120) is furthermore detachably arrangeable to the wheel hub (15) such that it is arrangeable in a first orientation relative to the wheel hub (15) and a second orientation relative to the wheel hub (15).

## Description

### TECHNICAL FIELD

The disclosure relates generally to vehicle wheels and wheel caps. In particular aspects, the disclosure relates to a wheel cap arrangement. The disclosure can be applied to heavy-duty vehicles, such as trucks, buses, and construction equipment, among other vehicle types including marine vessels. Although the disclosure may be described with respect to a particular vehicle, the disclosure is not restricted to any particular vehicle.

### BACKGROUND

Vehicle wheels, especially those used in diverse environments, face challenges related to brake overheating and contamination by dust and dirt. Effective cooling of the wheel brake is crucial for maintaining the performance and safety of the vehicle. Traditional wheel cap designs have limitations in efficiently managing airflow to cool the brakes while simultaneously preventing the ingress of contaminants in various operational environments.

In high-speed environments such as highways, cooling the wheel brake is paramount. The airflow generated by vehicle motion can be harnessed to improve brake cooling. However, in low-speed, high-dust environments like construction sites, it is equally important to minimize the ingress of dust and dirt into the wheel assembly to prevent undesirable temperature rise and/or brake wear. Current wheel cap designs often fail to adapt efficiently to these differing requirements, necessitating frequent maintenance and posing potential safety risks.

### SUMMARY

According to a first aspect of the disclosure, a wheel cap arrangement for a vehicle wheel having a wheel hub and a wheel brake arranged at the wheel hub is provided. The wheel cap arrangement comprises: an outer cap configured to be attached to the wheel hub, the outer cap comprising a plurality of centrally arranged through-holes and a plurality of peripherally arranged through holes; and an impeller detachably attached to the outer cap, the impeller comprising a centrally arranged impeller eye and a plurality of directionally shaped vanes arranged around the periphery of the impeller eye; wherein the impeller is furthermore detachably arrangeable to the wheel hub such that it is arrangeable in a first orientation relative to the wheel hub in which the vanes are arranged in a first impeller direction to receive air from the centrally arranged through-holes of the outer cap and to provide the received air to the wheel brake, and is arrangeable in a second orientation relative to the wheel hub in which the vanes are arranged in a second impeller direction to discharge air from the wheel brake through the peripherally arranged through-holes of the outer cap. The first aspect of the disclosure may seek to overcome problems with unsatisfying cooling of the wheel brakes. By providing a wheel cap arrangement comprising an impeller having directionally shaped vanes, wherein the impeller can be arranged relative to the wheel hub in first and second orientations for a) receiving air from the centrally arranged through-holes of the outer cap and to provide the received air to the wheel brake and b) discharging air from the wheel brake through the peripherally arranged through-holes of the outer cap, the wheel cap arrangement can be used to at least partly control the temperature of the wheel brake by the (cooling) air in accordance with option a) and the first orientation of the impeller, as well as by preventing, or at least reducing, fouling or intake of dust and dirt into the wheel cap in accordance with option b) and the second orientation of the impeller. In other words, in case the vehicle is to be operated on a highway (related to high speed, low dust/dirt environment), the wheel cap arrangement can be attached to the wheel hub with the impeller arranged relative to the wheel hub in the first orientation in order to cool the wheel brake. Thus, operation of the vehicle on the highway, i.e. during use of the wheel cap arrangement, the directionally shaped vanes are arranged relative to the wheel cap to receive, or suck, air from the centrally arranged through-holes of the outer cap, and push the received air to the wheel brake for cooling. Moreover, in case the vehicle is to be operated at a construction site or similar environment (related to low speed, high dust/dirt environment), the wheel cap arrangement can be attached to the wheel hub with the impeller arranged relative to the wheel hub in the second orientation in order to control the temperature by e.g. controlling the fouling of the wheel brake. Thus, operation of the vehicle at the construction site, i.e. during use of the wheel cap arrangement, the directionally shaped vanes are arranged relative to the wheel cap to discharge, or push, air from the wheel brake (and from the wheel hub) through the peripherally arranged through-holes of the outer cap to thereby prevent, or at least reduce the amount of, the dust and dirt from entering the wheel hub and reaching the wheel brake. Hereby, also deterioration of wheel brake may be reduced, due to a reduced wear. Thus, owing to that air is discharged from the peripherally arranged through-holes of the outer cap, the discharged air functions as a shield for the dust and dirt. A technical benefit may include an efficient control of the temperature of the wheel brake using the air. Moreover, during use of the wheel cap arrangement, the drag at the wheels of the vehicle may be reduced, at least for the first orientation of the impeller. Reference is typically made to operation of the vehicle in a forward direction, i.e. when the vehicle is driving forwards and not in reverse.

Optionally in some examples, including in at least one preferred example, the impeller comprises a first attachment structure and the outer cap comprises a second attachment structure configured to engage with the first attachment structure to detachably attach the outer cap to the impeller, wherein the first and second attachment structures are arranged such that the centrally arranged through-holes are axially aligned with the impeller eye and/or such that the peripherally arranged through-holes are arranged radially outside of the vanes of the impeller. A technical benefit may include an efficient structure for enabling the first and second orientations of the impeller. For example, the outer cap may comprise a first side arranged to face away from the outer cap (i.e. arranged to face outwards from the wheel hub when the wheel cap arrangement is attached to the wheel hub), and a second side arranged to face towards the outer cap (i.e. arranged to face inwards, towards the wheel hub when the wheel cap arrangement is attached to the wheel hub). Typically, the second side of the outer cap comprises the second attachment structure (and not the first side). The first and second attachment structures may be arranged to enable the impeller to be attached to the wheel cap in two different positions. For example, the impeller may comprise a first side arranged to face the wheel cap (i.e. arranged to face outwards from the wheel hub when the wheel cap arrangement is attached to the wheel hub), and a second side arranged to face away from the outer cap (i.e. arranged to face inwards, towards the wheel hub, when the wheel cap arrangement is attached to the wheel hub). Typically, both of the first and second sides of the impeller comprises the first attachment structure. Thus, in a first position of the impeller relative to the outer cap, the first side of the impeller is attached to the second side of the wheel cap (e.g. corresponding to an arrangement of the wheel cap arrangement providing the previously mentioned first orientation of the impeller). In a second position of the impeller relative to the outer cap, the second side of the impeller is attached to the second side of the wheel cap (e.g. corresponding to an arrangement of the wheel cap arrangement providing the previously mentioned second orientation of the impeller). Hereby, the wheel cap arrangement can be arranged with the impeller in either the first or second position relative to the outer cap by means of the first and second attachment structures, in order to prepare the wheel cap arrangement for an attachment to the wheel hub in either the first or second orientation of the impeller.

Optionally in some examples, including in at least one preferred example, the impeller is arranged in at least two pre-defined position relative to the outer cap. The at least two pre-defined positions may e.g. be the previously described first and second positions.

Optionally in some examples, including in at least one preferred example, the first and second attachment structure are forming a male-female connection, e.g. a snap-fit connection.

Optionally in some examples, including in at least one preferred example, the vanes are directionally shaped by being curved vanes. A technical benefit may include an efficient structure for enabling directionally shaped vanes. For example, the vanes are curved in the circumferential direction of the impeller. For example, in the first orientation of the impeller, the vanes are arranged with their curved shaped in the rotational direction of the wheel cap arrangement (and the wheel hub) when the vehicle is operated to drive in the forward direction. Correspondingly, in the second orientation of the impeller, the vanes may be arranged with their curved shaped opposite in the rotational direction of the wheel cap arrangement (and the wheel hub) when the vehicle is operated to drive in the forward direction.

Optionally in some examples, including in at least one preferred example, the impeller is arranged mirrored relative to the outer cap and/or the wheel hub in the second orientation relative to in the first orientation. A technical benefit may include an efficient structure for providing the two above options a) and b). With further reference to the curved vanes and the previously described first and second attachment structures, the impeller may be attached to outer cap in the first position in which the curved vanes are curved in the intended rotational direction of the wheel cap arrangement, the intended rotational direction referring to that when the wheel cap arrangement is attached to the wheel hub and for the forward direction of the vehicle. Correspondingly, the impeller may be attached to outer cap in the second position in which the curved vanes are curved opposite said intended rotational direction.

Optionally in some examples, including in at least one preferred example, the impeller and the outer cap are configured to be arranged at the hub, with the impeller arranged inside of the outer cap relative to the wheel hub, in one of the first and second orientations. A technical benefit may include an advantageous structure for providing the first and second orientations of the impeller.

Optionally in some examples, including in at least one preferred example, the wheel cap arrangement is arrangeable in a disassembled state in which the impeller is de-attached from the outer cap, and arranged distant to the wheel hub for shifting between the first and second orientations. A technical benefit may include an advantageous structure for shifting between the first and second orientations of the impeller. For example, as previously described, the first and second attachment structures may be used to achieve the shifting between the first and second orientations of the impeller. Thus, the wheel cap arrangement may be detached from the wheel hub, and the impeller may be detached from the outer cap by de-connecting the first and second attachment structures, whereafter the impeller is rearranged and re-connected to the outer cap by connecting the first and second attachments structures (e.g. by changing from the first position of the impeller to the second position of the impeller) and re-attached to the wheel hub. Hereby, the impeller may be shifted from the first orientation to the second orientation in an advantageous manner.

Optionally in some examples, including in at least one preferred example, during use, the first impeller direction of the vanes is oriented in the rotational direction of the wheel hub such that air is sucked into the centrally arranged through-holes of the outer cap and is pushed to wheel brake. A technical benefit may include an efficient structure for providing the previously mentioned option a). That the vanes are oriented in the rotational direction of the wheel hub may e.g. be achieved by the previously mentioned curved vanes (i.e. that the curved vanes are arranged curved in the rotational direction). However, instead of curved vanes, the vanes may be angled in the rotational direction, e.g. such that the vanes extends from the impeller's eye with an angle relative to the radial direction, e.g. +10° to +70° (+ indicating the rotational direction).

Optionally in some examples, including in at least one preferred example, during use, the second impeller direction of the vanes is oriented opposite the rotational direction of the wheel hub such that air is sucked from wheel brake and out of the peripherally arranged through-holes of the outer cap. A technical benefit may include an efficient structure for providing the previously mentioned option b). That the vanes are oriented opposite the rotational direction of the wheel hub may e.g. be achieved by the previously mentioned curved vanes (i.e. that the curved vanes are arranged curved opposite the rotational direction). However, instead of curved vanes, the vanes may be angled opposite the rotational direction, e.g. such that the vanes extends from the impeller's eye with an angle relative to the radial direction, e.g. -10° to -70° (- indicating opposite the rotational direction).

Optionally in some examples, including in at least one preferred example, during use, the second impeller direction of the vanes is oriented opposite the rotational direction of the wheel hub such that water in the hub is pushed to, and out of the peripherally arranged through-holes of the outer cap. A technical benefit may include the prevention, or at least the reduction of, water being trapped in the wheel hub. Again, the vanes may be oriented opposite the rotational direction of the wheel hub by the previously mentioned curved vanes (i.e. that the curved vanes are arranged curved opposite the rotational direction).

Optionally in some examples, including in at least one preferred example, the outer cap is disc-shaped. A technical benefit may include an advantageous structure for enabling the detachably arrangement with the impeller. For example, the previously first side of the outer cap may be formed by a first surface of the disc-shaped outer cap, and the second side of the outer cap may be formed by a second surface of the disc-shaped outer cap, the second surface being opposite the first surface and facing in an opposite direction. Typically, the outer cap is circularly shaped, or has a rounded shaped circumference.

Optionally in some examples, including in at least one preferred example, the peripherally arranged through-holes are evenly distributed along the periphery of the outer cap. A technical benefit may include an efficient structure for discharging air from the wheel brake when the impeller is arranged in the second orientation. For example, the number of the peripherally arranged through-holes is at least 5, or at least 10.

Optionally in some examples, including in at least one preferred example, the peripherally arranged through-holes are arranged in a peripheral portion of the outer cap, the peripheral portion being defined by the last 30 % or less of the radius of the outer cap. A technical benefit may include an efficient structure for discharging air from the wheel brake when the impeller is arranged in the second orientation. By having the peripherally arranged through-holes arranged in the last 30 % or less of the radius of the outer cap (the radius extending from a center of the outer cap to the periphery of the outer cap), the centrifugal forces of the impeller may be used to its benefit.

Optionally in some examples, including in at least one preferred example, the centrally arranged through-holes are arranged in a central portion of the outer cap, the central portion being defined by the first 30 % or less of the radius of the outer cap. A technical benefit may include an efficient structure for receiving (or sucking) air and provide it to the wheel brake when the impeller is arranged in the first orientation. By having the centrally arranged through-holes arranged in the first 30 % or less of the radius of the outer cap, the centrifugal forces of the impeller may be used to its benefit.

Optionally in some examples, including in at least one preferred example, the outer cap comprises an intermediate portion between the centrally and peripherally arranged through-holes, and wherein the intermediate portion is solid and contains no through-holes. A technical benefit may include an efficient structure for enabling air to flow as in the previously mentioned options a) and b). The intermediate portion may e.g. make up the middle portion between a central portion and a peripheral portion, and e.g. extend along at least 40 % of the radius of the outer cap.

According to a second aspect of the disclosure, a wheel arrangement comprising a vehicle wheel having a wheel hub and wheel brake, and a wheel cap arrangement according to the first aspect of the disclosure is provided. The second aspect of the disclosure may seek to solve the same problem as described for the first aspect of the disclosure. Thus, effects and features of the second aspect of the disclosure are largely analogous to those described above in connection with the first aspect of the disclosure.

According to a third aspect of the disclosure, a vehicle comprising the wheel cap arrangement of the first aspect of the disclosure, or the wheel arrangement according to the second aspect of the disclosure, is provided. The third aspect of the disclosure may seek to solve the same problem as described for the first aspect of the disclosure. Thus, effects and features of the third aspect of the disclosure are largely analogous to those described above in connection with the first aspect of the disclosure.

According to a fourth aspect of the disclosure, a method for attaching a wheel cap arrangement to a wheel hub of a vehicle wheel having a wheel brake is provided. The method comprises: providing a wheel cap arrangement comprising an outer cap comprising a plurality of centrally arranged through-holes and a plurality of peripherally arranged through holes, and an impeller comprising a centrally arranged impeller eye and a plurality of directionally shaped vanes arranged around the periphery of the impeller eye; attaching the impeller to the outer cap; subsequently arranging the wheel cap arrangement at the wheel hub such that the impeller is arranged inside of the outer cap, and such that the impeller is arranged relative to the wheel hub in a first orientation in which the vanes are arranged in a first impeller direction to receive air from the centrally arranged through-holes of the outer cap and to provide the received air to the wheel brake, or in a second orientation in which the vanes are arranged in a second impeller direction to discharge air from the wheel brake through the peripherally arranged through-holes of the outer cap. The fourth aspect of the disclosure may seek to solve the same problem as described for the first aspect of the disclosure. Thus, effects and features of the fourth aspect of the disclosure are largely analogous to those described above in connection with the first aspect of the disclosure. Thus, the impeller may be detachably attached to the outer cap by arranging the impeller in the first and second positions as described with reference to the first aspect of the disclosure, e.g. by connecting and dis-connecting the first and second attachment structures.

Optionally in some examples, including in at least one preferred example, the method further comprises attaching the impeller to the outer cap such that the centrally arranged through-holes are axially aligned with the impeller eye.

Optionally in some examples, including in at least one preferred example, the method further comprises attaching the impeller to the outer cap such that the peripherally arranged through-holes are arranged radially outside of the vanes of the impeller.

Optionally in some examples, including in at least one preferred example, the method further comprises arranging the wheel cap arrangement at the wheel hub in an assembled state such that the impeller is arranged in one of the first and second orientations.

Optionally in some examples, including in at least one preferred example, the method further comprises disassembling the wheel cap arrangement from the wheel hub, de-attaching the impeller from the outer cap, and subsequently re-attaching the impeller to the outer cap and arranging the wheel cap arrangement at the wheel hub in the assembled state with a shift of the orientation of the impeller between the first and second orientations.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

**FIG. 1** is an exemplary, partly schematic, side view of a vehicle comprising a wheel arrangement and a wheel cap arrangement according to one example.
**FIG. 2a** is an exemplary schematic view of the wheel cap arrangement and **FIG. 2b** is an exemplary schematic view of the wheel arrangement comprising the wheel cap arrangement of Fig. 2a according to one example.
**FIG. 3** is an exemplary schematic view of the wheel cap arrangement according to one example.
**FIG. 4** is an exemplary schematic view of the wheel cap arrangement according to one example.
**FIG. 5** is a schematic flow-chart of a method for attaching a wheel cap arrangement to a wheel hub according to one example.

### DETAILED DESCRIPTION

The detailed description set forth below provides information and examples of the disclosed technology with sufficient detail to enable those skilled in the art to practice the disclosure.

The disclosed technology may solve the problem related to unsatisfying cooling of the wheel brakes. The disclosed technology comprises a wheel cap arrangement comprising an impeller having directionally shaped vanes wherein the impeller can be arranged relative to wheel hub in first and second orientations for a) receiving air from centrally arranged through-holes of the outer cap and to provide the received air to the wheel brake and b) discharging air from the wheel brake through peripherally arranged through-holes of the outer cap. Hereby, the wheel cap arrangement can be used to at least partly control the temperature of the wheel brake by the (cooling) air in accordance with option a) and the first orientation of the impeller, as well as by preventing, or at least reducing, fouling or intake of dust and dirt into the wheel hub in accordance with option b) and the second orientation of the impeller. Hereby, the arrangement of the wheel cap arrangement, and the impeller in particular, can be adapted based on the anticipated operation of the vehicle. For example, in case the vehicle is to be operated at a highway (related to high speed, low dust/dirt environment), the impeller can be arranged in the first orientation for cooling the wheel brake with (cooling) air, and in case the vehicle is to be operated at a construction site or similar environment (related to low speed, high dust/dirt environment), the impeller can be arranged in the second orientation for preventing fouling of, or intake of dust and dirt to, the wheel brake. A technical benefit may include an efficient control of the temperature of the wheel brake using air.

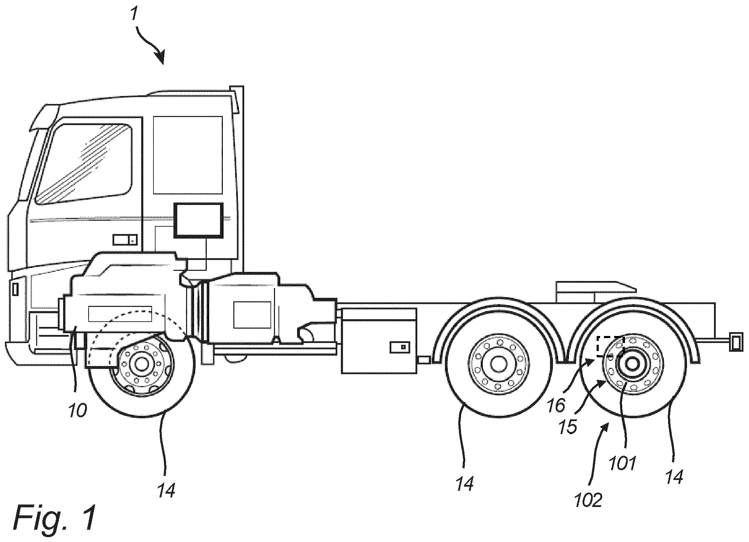

**FIG. 1** shows a vehicle 1 in the form of an exemplary heavy-duty truck. The vehicle 1 comprises an engine 10 for propelling the vehicle 1 at least in the forward direction. The vehicle 1 may be an electric vehicle, such as a full electric vehicle or a hybrid, wherein the engine 10 is an electric traction machine powered by an energy storage system (not shown), or the vehicle 1 may be operated by liquid or gaseous fuel (e.g. diesel or hydrogen) in which the engine 10 is an internal combustion engine. The vehicle 1 further comprises other parts of the powertrain such as transmission including drive shafts and wheels 14. Each one of the wheels 14 typically comprises an associated wheel hub 15 and wheel brake 16 (only indicated for one of the back wheels in Fig. 1). The vehicle 1 further comprises at least one wheel arrangement 102 comprising a vehicle wheel 14 and associated wheel hub 15 and wheel brake 16 as well as a wheel cap arrangement 101, which will be further exemplified in the following. It should be noted that one of, some of, or all of the vehicle wheels 14 may be provided with a corresponding wheel arrangement 102.

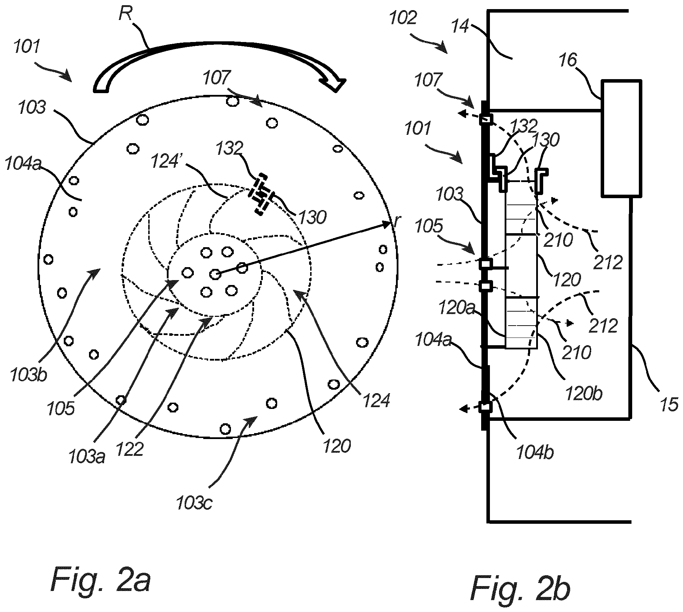

In **FIG. 2****,** an example wheel cap arrangement 101 is shown in Fig. 2a and an associated wheel arrangement 102 is shown in Fig. 2b. The wheel cap arrangement 101 and the wheel arrangement 102 may e.g. correspond to those of the vehicle 1 of Fig. 1. The wheel cap arrangement 101 is configured for being attached to the wheel hub 15 of the vehicle wheel 14.

The wheel cap arrangement 101 comprises an outer cap 103 configured to be attached to the wheel hub 15, e.g. using bolts or other conventional attachment means. In the example of Fig. 2a, the outer cap 103 disc-shaped. Thus, the outer cap 103 may defined by a round, or circular, outer periphery and a radial extension extending from a central portion 103a to peripheral portion 103c in which an intermediate portion 103b is arranged in between the central portion 103a and the peripheral portion 103c. The peripheral portion 103c may e.g. be defined by the last 30 % or less of the radius r of the outer cap 103. Correspondingly, the central portion 103a may be defined by the first 30 % or less of the radius r of the outer cap 103.

The outer cap 103 comprises a plurality of centrally arranged through-holes 105 arranged in the central portion 103a, and a plurality of peripherally arranged through-holes 107 arranged in the peripheral portion 103c. In the intermediate portion 103b, there are not any through-holes provided. Thus, the intermediate portion 103b is solid. The peripherally arranged through-holes 107 are preferably distributed evenly along the periphery of the outer cap 103.

The wheel cap arrangement 101 further comprises an impeller 120 detachably attached to the outer cap 103. In Fig. 2a, the impeller 120 is shown in dashed, as being arranged behind the outer cap 103. The impeller 120 comprises a centrally arranged impeller eye 122 and a plurality of directionally shaped vanes 124 arranged around the periphery of the impeller eye 122. The vanes 124 of Fig. 2a are directionally shaped by being curved vanes 124'. Moreover, as shown in Fig. 2a, an (intended) rotational direction R of the wheel cap arrangement 101 is indicated by the curved arrow. The rotational direction R is typically referring to an operation of the vehicle 1 in a forward direction, i.e. when the vehicle 1 is driving forwards and not in reverse. Thus, the rotational direction R is that of the vehicle wheel 14, the wheel hub 15 and the wheel cap arrangement 101 when being attached to the wheel hub 15. In the arrangement of Fig. 2a, the curved vanes 124' are curved in the rotational direction R. That is, the curvature of the vanes 124', from the impeller eye 122 and radially outwards, corresponds to the rotational direction R. The arrangement of the curved vanes 124' in Fig. 2a corresponds to a first impeller direction.

The impeller 120 comprises a first attachment structure 130 and the outer cap 103 comprises a second attachment structure 132 configured to engage with the first attachment structure 130 to detachably attach the outer cap 103 to the impeller 120. In Fig. 2a, only one of each of the first and second attachment structures 130, 132 is shown, but it should be understood that a plurality of corresponding first and second attachment structures may be included in the wheel cap arrangement 101. The first attachment structure 130 is e.g. arranged in an outer surface of the impeller 120, the outer surface facing the outer cap 103, and the second attachment structure 132 may e.g. be arranged in the intermediate portion 103b and facing the impeller 120. The first and second attachment structures 130, 132 are typically arranged to enable attachment of the outer cap 103 to the impeller 120 such that the centrally arranged through-holes 105 are axially aligned with the impeller eye 122 and/or such that the peripherally arranged through-holes 107 are arranged radially outside of the vanes 124 of the impeller 120.

Turning to Fig. 2b showing a wheel arrangement 102 comprising the wheel cap arrangement 101 of Fig. 2a, and a vehicle wheel 14 having a wheel hub 15 and a wheel brake 16. As shown in Fig. 2b, the wheel cap arrangement 101 is attached to the wheel hub 15, e.g. by that the outer cap 103 is attached to the vehicle wheel 14 (or wheel hub 15). Furthermore, as shown in Fig. 2b, the outer cap 103 comprises a first side 104a arranged to face outwards from the wheel hub 15 (i.e. in a direction away from the vehicle wheel 14), and a second side 104b arranged to face inwards, towards the wheel hub 15. The impeller 120 is attached to the outer cap 103 such that it is arranged inside of the outer cap 103 relative to the wheel hub 15.

The impeller 120 is detachably arrangeable to the wheel hub 15 such that it is arrangeable in a first orientation relative to the wheel hub 15 in which the vanes 124 are arranged in a first impeller direction to receive air from the centrally arranged through-holes 105 of the outer cap 103 and to provide the received air to the wheel brake 16, as shown by first dashed arrows 210 in Fig. 2b. Moreover, impeller 120 is detachably arrangeable to the wheel hub 15 such that it is arrangeable in a second orientation relative to the wheel hub 15 in which the vanes 124 are arranged in a second impeller direction to discharge air from the wheel brake 16 through the peripherally arranged through-holes 107 of the outer cap 103, as shown by second dashed arrows 212 in Fig. 2b.

Hereby, in case the vehicle 1 is to be operated with a relatively high speed and in an environment with a relatively low amount dust or dirt (e.g. operation along a road, or a highway), the wheel cap arrangement 101 can be attached to the wheel hub 15 with the impeller 120 arranged in the first orientation in order to cool the wheel brake. An example of how the curved vanes 124' are arranged relative to the rotational direction R when the impeller 120 is arranged in the first orientation is shown in Fig. 2a. Thus, during use of the wheel cap arrangement 101, the curved vanes 124' are arranged relative to the wheel hub 15, and the rotational direction R thereof, to receive, or suck, air from the centrally arranged through-holes 105 of the outer cap 103, and push the received air to the wheel brake 16 for cooling. In other words, during use, the first impeller direction 124 is oriented in the rotational direction R such that air is sucked into the centrally arranged through-holes 105 of the outer cap 103 and is pushed to wheel brake 16. Hereby, the temperature control of the wheel brake 16 is improved.

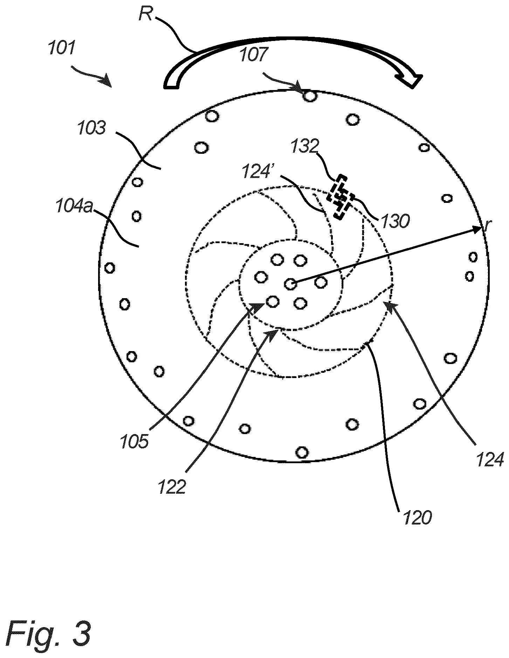

Moreover, in case the vehicle is to be operated with a relatively low speed and in an environment with a relatively high amount of dust or dirt (e.g. operation at a construction site), the wheel cap arrangement 101 can be arranged relative to the wheel hub 15 in the second orientation in order to control the temperature of the wheel brake 16 by e.g. controlling the fouling of the wheel brake 16. An example of how the curved vanes 124' are arranged relative to the rotational direction R when the impeller 120 is arranged in the second orientation is shown in Fig. 3. Thus, in the arrangement of Fig. 3, the curved vanes 124' are curved in a direction being opposite the rotational direction R. That is, the curvature of the vanes 124', from the impeller eye 122 and radially outwards, is opposite to the rotational direction R. The arrangement of the curved vanes 124' in Fig. 3 corresponds to a second impeller direction. Thus, during use of the wheel cap arrangement 101, the curved vanes 124' are arranged relative to the wheel hub 15, and the rotational direction R thereof, to discharge, or push, air from the wheel brake 16 (and from the wheel hub 15) through the peripherally arranged through-holes 107 of the outer cap 103 to thereby prevent, or at least reduce the amount of, the dust and dirt from entering the wheel hub 15 and reaching the wheel brake 16. In other words, during use, the second impeller direction of the vanes 124 is oriented opposite the rotational direction R such that air is sucked from wheel brake 16 and out of the peripherally arranged through-holes 107 of the outer cap 103. Hereby, the temperature control of the wheel brake 16 is improved. By the second orientation of the impeller 120, also water present in the wheel hub 15 may be pushed to, and out of, the peripherally arranged through-holes 107 of the outer cap 103.

In more detail, the impeller 120 comprises first and second opposite sides 120a, 120b. The first side 120a is in the arrangement shown in Fig. 2b arranged to face the outer cap 103, and the opposite second side 120b is arranged to face away from the outer cap 103. Typically only the second side 104b of the outer cap 103 comprises the second attachment structure 132, but each one of the first and second sides 120a, 120b comprises the first attachment structure 130. It should be noted that the impeller 120 may be disc-shaped, or cylindrically shaped. The first and second attachment structures 130, 132 may be arranged to enable the impeller 120 to be attached to the outer cap 103 in two different positions for preparing the wheel cap arrangement 101 for an attachment to the wheel hub 15 in the corresponding first and second orientations of the impeller 120. Thus, in a first position of the impeller 120 relative to the outer cap 103, the first side 120a of the impeller 120 is attached to the second side 104b of the outer cap 103, as shown in Fig. 2a (corresponding to an arrangement of the wheel cap arrangement 101 providing the previously mentioned first orientation of the impeller 120). In a second position of the impeller 120 relative to the outer cap 103, the second side 120b of the impeller 120 is attached to the second side 104b of the outer cap 103, as shown in Fig. 3 (corresponding to an arrangement of the wheel cap arrangement 101 providing the previously mentioned second orientation of the impeller 120). The first and the second positions of the impeller 120 provide for mirrored arrangements of the curved vanes 124' relative to the outer cap 130. Hereby, the wheel cap arrangement 101 can be arranged with the impeller 120 in either the first or second position relative to the outer cap 103 by means of the first and second attachment structures 130, 132, as shown in Figs. 2a and 3, in order to prepare the wheel cap arrangement 101 for an attachment to the wheel hub 15 in either the first or second orientation of the impeller 120.

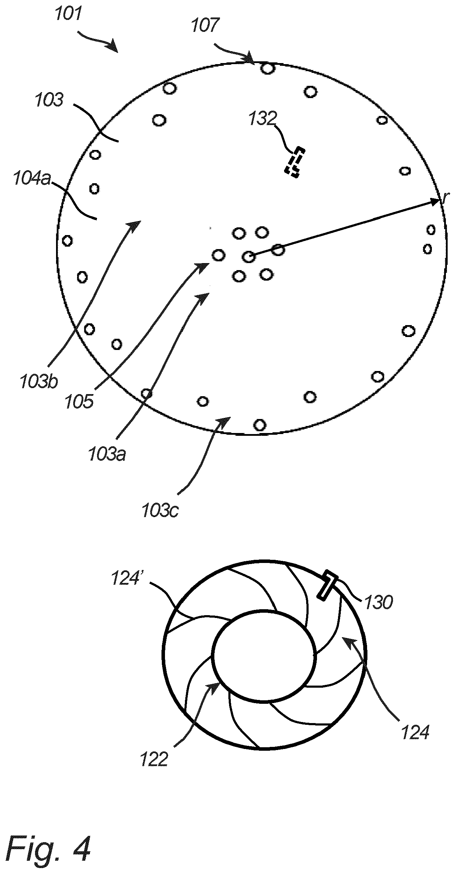

Thus, the first and second attachment structures 130, 132 are arranged to enable the impeller 120 to be attached to the wheel hub 15 in two different positions, and thereby be attached to the wheel hub 15 in two different orientations. Owing to the first and second attachment structures 130, 132, the wheel cap arrangement 101 is arrangeable in a disassembled state in which the impeller 120 is de-attached from the outer cap 103, and arranged distant to the wheel hub 15 for shifting between the first and second orientations. This is exemplified in Fig. 4.

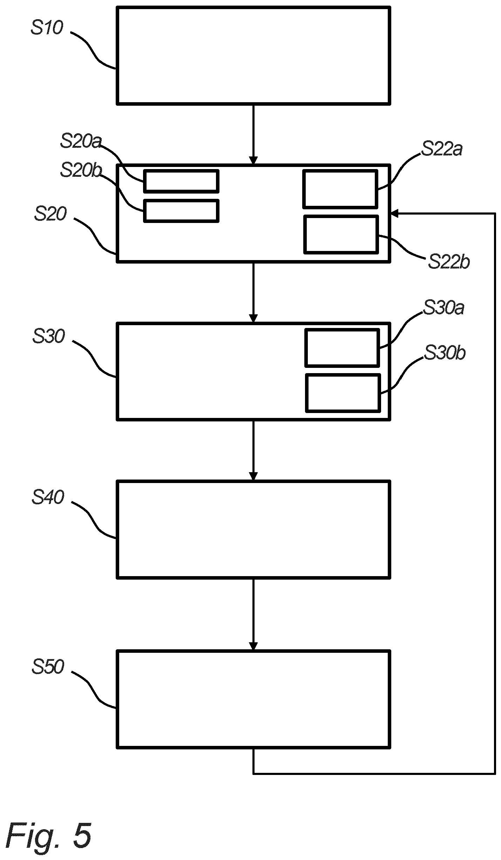

The function of the wheel cap arrangement 101 will now be further elucidated with reference to the flow chart in Fig. 5 representing a method for attaching a wheel cap arrangement 101 to a wheel hub 15 of a vehicle wheel 14 having a wheel brake 16, such as the wheel cap arrangement 101 described with reference to Figs. 2-4. Thus, reference will be additionally made to the wheel arrangement 102 and the wheel cap arrangement 101 of Figs. 2-4.

In a first action or step, S10, a wheel cap arrangement 101 comprising an outer cap 103 comprising a plurality of centrally arranged through-holes 105 and a plurality of peripherally arranged through-holes 107, and an impeller 120 comprising a centrally arranged impeller eye 122 and a plurality of directionally shaped vanes 124 arranged around the periphery of the impeller eye 122, is provided. The wheel cap arrangement 101 may thus be that described in Figs. 2-4.

In a second action or step, S20, the impeller 120 is attached to the outer cap 103. Thus, the impeller may be attached to the outer cap 103 by the previously described first and second attachment structures 130, 132. For example, the second action or step S20 may comprise attaching S20a the impeller 120 to the outer cap 103 such that the centrally arranged through-holes 105 are axially aligned with the impeller eye 122. Additionally or alternatively, the second action or step S20 may comprise attaching S20b the impeller 120 to the outer cap 103 such that the peripherally arranged through-holes 107 are arranged radially outside of the vanes 124 of the impeller 120. For example, the second action or step S20 comprises attaching S22a the impeller 120 to the outer cap 103 in a first position relative to the outer cap 103. The first position is that described with reference to Fig. 2a. Alternatively, the second action or step S20 comprises attaching S22b the impeller 120 to the outer cap 103 in a second position relative to the outer cap 103. The second position is that described with reference to Fig. 3.

In a third action or step S30, subsequent to S20, the wheel cap arrangement 101 is arranged at the wheel hub 15 such that the impeller 120 is arranged inside of the outer cap 103, and such that the impeller 120 is arranged relative to the wheel hub 15 in a first orientation, indicated by sub-step or sub-action S30a, in which the vanes 124 are arranged in a first impeller direction. The first impeller direction has been previously described and typically corresponds to arranging the impeller 120 in the first position relative to the outer cap, and is thus occurring subsequent to S22a. Alternatively, the wheel cap arrangement 101 is arranged at the wheel hub 15 such that the impeller 120 is arranged inside of the outer cap 103, and such that the impeller 120 is arranged relative to the wheel hub 15 in a second orientation, indicated by sub-step or sub-action S30b, in which the vanes 124 are arranged in a second impeller direction. The second impeller direction has been previously described and typically corresponds to arranging the impeller 120 in the second position relative to the outer cap, and is thus occurring subsequent to S22b. Thus, by the third action or step S30, or any of its sub-steps or sub-actions S30a, S30b, the wheel cap arrangement 101 is arranged at the wheel hub 15 in an assembled state such that the impeller 120 is arranged in one of the first and second orientations.

In a fourth action or step S40, subsequent to S30, the wheel cap arrangement 101 is dissembled from the wheel hub 15. This may e.g. be achieved by releasing the outer cap 103 from the wheel 14 or wheel hub 15, e.g. by unscrewing any bolts used to attach the outer cap 103 to the wheel 14 or wheel hub 15.

In a fifth action or step S50, the impeller 120 is de-attached from the outer cap 103. This may e.g. be achieved by disengaging the first and second attachment structures 130, 132, and is e.g. shown in Fig. 4.

The method may then comprise re-attaching the impeller 120 to the outer cap 103, by the second action or step S20, or any of its sub-actions or sub-steps S20a, S20b, S22a, S22b, and again arranging the wheel cap arrangement 101 at the wheel hub 15 in the assembled state by the third action or step S30, or any of its sub-actions or sub-steps S30a, S30b, with a shift of the orientation of the impeller 120 between the first and second orientations.

Thus, in summary, a wheel cap arrangement 101 for a vehicle wheel 14 having a wheel hub 15 and a wheel brake 16 arranged at the wheel hub 14, is provided. The wheel cap arrangement 101 comprises: an outer cap 103 configured to be attached to the wheel hub 15, the outer cap 103 comprising a plurality of centrally arranged through-holes 105 and a plurality of peripherally arranged through-holes 107; an impeller 120 detachably attached to the outer cap 103, the impeller 120 comprising a centrally arranged impeller eye 122 and a plurality of directionally shaped vanes 124 arranged around the periphery of the impeller eye 122; wherein the impeller 122 is furthermore detachably arrangeable to the wheel hub 15 such that it is arrangeable in a first orientation relative to the wheel hub 15 and a second orientation relative to the wheel hub 15.

Example 1. A wheel cap arrangement for a vehicle wheel having a wheel hub and a wheel brake arranged at the wheel hub, the wheel cap arrangement comprising: an outer cap configured to be attached to the wheel hub, the outer cap comprising a plurality of centrally arranged through-holes and a plurality of peripherally arranged through holes; and an impeller detachably attached to the outer cap, the impeller comprising a centrally arranged impeller eye and a plurality of directionally shaped vanes arranged around the periphery of the impeller eye; wherein the impeller is furthermore detachably arrangeable to the wheel hub such that it is arrangeable in a first orientation relative to the wheel hub in which the vanes are arranged in a first impeller direction to receive air from the centrally arranged through-holes of the outer cap and to provide the received air to the wheel brake, and is arrangeable in a second orientation relative to the wheel hub in which the vanes are arranged in a second impeller direction to discharge air from the wheel brake through the peripherally arranged through-holes of the outer cap.

Example 2. The wheel cap arrangement of example 1, wherein the impeller comprises a first attachment structure and the outer cap comprises a second attachment structure configured to engage with the first attachment structure to detachably attach the outer cap to the impeller, wherein the first and second attachment structures are arranged such that the centrally arranged through-holes are axially aligned with the impeller eye and/or such that the peripherally arranged through-holes are arranged radially outside of the vanes of the impeller.

Example 3. The wheel cap arrangement of any of examples 1-2, wherein the vanes are directionally shaped by being curved vanes.

Example 4. The wheel cap arrangement of any of examples 1-3, wherein the impeller is arranged mirrored relative to the outer cap and/or the wheel hub in the second orientation relative to in the first orientation.

Example 5. The wheel cap arrangement of any of examples 1-4, wherein the impeller and the outer cap are configured to be arranged at the hub, with the impeller arranged inside of the outer cap relative to the wheel hub, in one of the first and second orientations.

Example 6. The wheel cap arrangement of example 5, being arrangeable in a disassembled state in which the impeller is de-attached from the outer cap, and arranged distant to the wheel hub for shifting between the first and second orientations.

Example 7. The wheel cap arrangement of any of examples 1-6, wherein, during use, the first impeller direction of the vanes is oriented in the rotational direction of the wheel hub such that air is sucked into the centrally arranged through-holes of the outer cap and is pushed to wheel brake.

Example 8. The wheel cap arrangement of any of examples 1-7, wherein, during use, the second impeller direction of the vanes is oriented opposite the rotational direction of the wheel hub such that air is sucked from wheel brake and out of the peripherally arranged through-holes of the outer cap.

Example 9. The wheel cap arrangement of any of examples 1-8, wherein, during use, the second impeller direction of the vanes is oriented opposite the rotational direction of the wheel hub such that water in the hub is pushed to, and out of the peripherally arranged through-holes of the outer cap.

Example 10. The wheel cap arrangement of any of examples 1-9, wherein the outer cap is disc-shaped.

Example 11. The wheel cap arrangement of any of examples 1-10, wherein the peripherally arranged through-holes are evenly distributed along the periphery of the outer cap.

Example 12. The wheel cap arrangement of any of examples 1-11, wherein the peripherally arranged through-holes are arranged in a peripheral portion of the outer cap, the peripheral portion being defined by the last 30 % or less of the radius of the outer cap.

Example 13. The wheel cap arrangement of any of examples 1-12, wherein the centrally arranged through-holes are arranged in a central portion of the outer cap, the central portion being defined by the first 30 % or less of the radius of the outer cap.

Example 14. The wheel cap arrangement of any of examples 1-13, wherein the outer cap comprises an intermediate portion between the centrally and peripherally arranged through-holes, and wherein the intermediate portion is solid and contains no through-holes.

Example 15. A wheel arrangement comprising a vehicle wheel having a wheel hub and a wheel brake, and a wheel cap arrangement according to any of examples 1-14.

Example 16. A vehicle comprising the wheel cap arrangement of any of examples 1-14, or the wheel arrangement according to example 15.

Example 17. A method for attaching a wheel cap arrangement to a wheel hub of a vehicle wheel having a wheel brake, the method comprising: providing a wheel cap arrangement comprising an outer cap comprising a plurality of centrally arranged through-holes and a plurality of peripherally arranged through holes, and an impeller comprising a centrally arranged impeller eye and a plurality of directionally shaped vanes arranged around the periphery of the impeller eye; attaching the impeller to the outer cap; subsequently arranging the wheel cap arrangement at the wheel hub such that the impeller is arranged inside of the outer cap, and such that the impeller is arranged relative to the wheel hub in a first orientation in which the vanes are arranged in a first impeller direction to receive air from the centrally arranged through-holes of the outer cap and to provide the received air to the wheel brake, or in a second orientation in which the vanes are arranged in a second impeller direction to discharge air from the wheel brake through the peripherally arranged through-holes of the outer cap.

Example 18. The method of example 17, further comprising attaching the impeller to the outer cap such that the centrally arranged through-holes are axially aligned with the impeller eye.

Example 19. The method of any of examples 17-18, further comprising attaching the impeller to the outer cap such that the peripherally arranged through-holes are arranged radially outside of the vanes of the impeller.

Example 20. The method of any of examples 17-19, further comprising arranging the wheel cap arrangement at the wheel hub in an assembled state such that the impeller is arranged in one of the first and second orientations.

Example 21. The method of example 20, further comprising disassembling the wheel cap arrangement from the wheel hub, de-attaching the impeller from the outer cap, and subsequently re-attaching the impeller to the outer cap and arranging the wheel cap arrangement at the wheel hub in the assembled state with a shift of the orientation of the impeller between the first and second orientations.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A wheel cap arrangement (101) for a vehicle wheel (14) having a wheel hub (15) and a wheel brake (16) arranged at the wheel hub (15), the wheel cap arrangement (101) comprising:
- an outer cap (103) configured to be attached to the wheel hub (15), the outer cap (103) comprising a plurality of centrally arranged through-holes (105) and a plurality of peripherally arranged through-holes (107),
- an impeller (120) detachably attached to the outer cap (103), the impeller (120) comprising a centrally arranged impeller eye (122) and a plurality of directionally shaped vanes (124) arranged around the periphery of the impeller eye (122),
wherein the impeller (120) is furthermore detachably arrangeable to the wheel hub (15) such that it is arrangeable in a first orientation relative to the wheel hub (15) in which the vanes (124) are arranged in a first impeller direction to receive air from the centrally arranged through-holes (105) of the outer cap (103) and to provide the received air to the wheel brake (16), and is arrangeable in a second orientation relative to the wheel hub (15) in which the vanes (124) are arranged in a second impeller direction to discharge air from the wheel brake (16) through the peripherally arranged through-holes (107) of the outer cap (103).

2. The wheel cap arrangement (101) of claim 1, wherein the impeller (120) comprises a first attachment structure (130) and the outer cap (103) comprises a second attachment structure (132) configured to engage with the first attachment structure (130) to detachably attach the outer cap (103) to the impeller (120), wherein the first and second attachment structures are arranged such that the centrally arranged through-holes (105) are axially aligned with the impeller eye (122) and/or such that the peripherally arranged through-holes (107) are arranged radially outside of the vanes (124) of the impeller (120).

3. The wheel cap arrangement (101) of any of claims 1-2, wherein the vanes (124) are directionally shaped by being curved vanes (124').

4. The wheel cap arrangement (101) of any of claims 1-3, wherein the impeller (120) is arranged mirrored relative to the outer cap (103) and/or the wheel hub (15) in the second orientation relative to in the first orientation.

5. The wheel cap arrangement (101) of any of claims 1-4, wherein the impeller (120) and the outer cap (103) are configured to be arranged at the hub (15), with the impeller (120) arranged inside of the outer cap (103) relative to the wheel hub (15), in one of the first and second orientations.

6. The wheel cap arrangement (101) of claim 5, being arrangeable in a disassembled state in which the impeller (120) is de-attached from the outer cap (103), and arranged distant to the wheel hub (15) for shifting between the first and second orientations.

7. The wheel cap arrangement (101) of any of claims 1-6, wherein, during use, the first impeller direction of the vanes (124) is oriented in the rotational direction of the wheel hub () such that air is sucked into the centrally arranged through-holes (105) of the outer cap (103) and is pushed to wheel brake (16).

8. The wheel cap arrangement (101) of any of claims 1-7, wherein, during use, the second impeller direction of the vanes (124) is oriented opposite the rotational direction of the wheel hub () such that air is sucked from wheel brake (16) and out of the peripherally arranged through-holes (107) of the outer cap (103).

9. The wheel cap arrangement (101) of any of claims 1-8, wherein, during use, the second impeller direction of the vanes (124) is oriented opposite the rotational direction of the wheel hub () such that water in the hub (15) is pushed to, and out of the peripherally arranged through-holes (107) of the outer cap (103).

10. The wheel cap arrangement (101) of any of claims 1-9, wherein the outer cap (103) is disc-shaped.

11. The wheel cap arrangement (101) of any of claims 1-10, wherein the peripherally arranged through-holes (107) are arranged in a peripheral portion (103c) of the outer cap (103), the peripheral portion (103c) being defined by the last 30 % or less of the radius (r) of the outer cap (103).

12. A wheel arrangement (102) comprising a vehicle wheel (14) having a wheel hub (15) and a wheel brake (16), and a wheel cap arrangement (101) according to any of claims 1-11.

13. A vehicle (1) comprising the wheel cap arrangement (101) of any of claims 1-11, or the wheel arrangement (102) according to claim 12.

14. A method for attaching a wheel cap arrangement (101) to a wheel hub (15) of a vehicle wheel (14) having a wheel brake (16), the method comprising:
- providing (S10) a wheel cap arrangement (101) comprising an outer cap (103) comprising a plurality of centrally arranged through-holes (105) and a plurality of peripherally arranged through-holes (107), and an impeller (120) comprising a centrally arranged impeller eye (122) and a plurality of directionally shaped vanes (124) arranged around the periphery of the impeller eye (122),
- attaching (S20, S20a, S20b, S22a, S22b) the impeller (120) to the outer cap (103),
- subsequently arranging (S30, S30a, S30b) the wheel cap arrangement (101) at the wheel hub (15) such that the impeller (120) is arranged inside of the outer cap (103), and such that the impeller (120) is arranged relative to the wheel hub (15) in a first orientation in which the vanes (124) are arranged in a first impeller direction to receive air from the centrally arranged through-holes (105) of the outer cap (103) and to provide the received air to the wheel brake (16), or in a second orientation in which the vanes (124) are arranged in a second impeller direction to discharge air from the wheel brake (16) through the peripherally arranged through-holes (107) of the outer cap (103).

15. The method of claim 14, further comprising disassembling (S40) the wheel cap arrangement (101) from the wheel hub (15), de-attaching (S50) the impeller (120) from the outer cap (103), and subsequently re-attaching (S20, S20a, S20b, S22a, S22b) the impeller (120) to the outer cap (103) and arranging (S30, S30a, S30b) the wheel cap arrangement (101) at the wheel hub (15) in the assembled state with a shift of the orientation of the impeller (120) between the first and second orientations.
